# EUROPÄISCHE PATENTSCHRIFT

(11) **EP 0 977 677 B1**
(45) Veröffentlichungstag und Bekanntmachung des Hinweises auf die Patenterteilung: **06.10.2004**
(21) Anmeldenummer: 98921405.1
(22) Anmeldetag: 30.03.1998
(51) Int. Cl.: B60R 11/02, H04R 1/28

(54) **VORRICHTUNG ZUR KLANGERZEUGUNG IN EINEM KRAFTFAHRZEUG**
AUTOMOBILE SOUND PRODUCING DEVICE
DISPOSITIF POUR LA PRODUCTION D'UN SON DANS UN VEHICULE AUTOMOBILE

(30) Priorität: 24.04.1997 DE 19717278
(43) Veröffentlichungstag der Anmeldung: 09.02.2000
(73) Patentinhaber: Volkswagen Aktiengesellschaft, 38436 Wolfsburg (DE)
(72) Erfinder: EISNER, Viktor, D-38527 Meine (DE)
(86) Internationale Anmeldenummer: PCT/EP1998/001846
(87) Internationale Veröffentlichungsnummer: WO 1998/047740

(56) Entgegenhaltungen:
- EP-A- 0 712 758
- DE-A- 3 317 518
- US-A- 5 218 175
- US-A- 5 397 866
- PATENT ABSTRACTS OF JAPAN vol. 017, no. 181 (M-1394), 8. April 1993 & JP 04 334636 A (MITSUBISHI ELECTRIC CORP), 20. November 1992

## Beschreibung

Die Erfindung betrifft eine Vorrichtung zur Klangerzeugung in einem Kraftfahrzeug gemäß dem Oberbegriff des Patentanspruchs 1.

Bei modernen Kraftfahrzeugen gibt es seit langem Bestrebungen, den vorhandenen Raum zur Erhöhung des Komforts optimal zu nutzen. Dazu wurden vielfältige Anstrengungen unternommen, Komponenten kompakter auszugestalten oder wenn möglich in Fahrzeugbereiche zu verlagern, in denen konstruktiv bedingt freier Raum zur Verfügung steht. So wurde bereits vorgeschlagen, die voluminöse Baßbox außerhalb der Fahrgastzelle anzuordnen. Die dafür nötige konstruktive Umgestaltung ist z. B. aus der DE 33 17 518 bekannt, bei der die Baßbox eine Öffnung aufweist, an die ein akustischer Leiter in Form eines Rohres angekoppelt ist. Mittels dieses Rohres können die in der Baßbox erzeugten Schallwellen gerichtet zu einem Ort geleitet werden. Zur Erhöhung des ausnutzbaren Raumes der Fahrgastzelle wurde daher vorgeschlagen, die Baßboxen in einem anderen Trockenbereich des Fahrzeuges anzuordnen, wo die elektrischen Leitungen der Baßbox vor störender Feuchtigkeit geschützt sind. Nachteilig an der vorgeschlagenen Anordnung ist, daß der gewonnene, ausnutzbare Raum in der Fahrgastzelle durch einen verringerten ausnutzbaren Raum in anderen Trockenbereichen, wie z.B. dem Kofferraum, bewirkt wird. Da das Ladevolumen des Kofferraumes jedoch ebenfalls ein Maß für den Komfort eines Kraftfahrzeuges ist, führt die Verlagerung der Baßboxen aus der Fahrgastzelle in einen anderen Trockenbereich nur zu einer Verschiebung und nicht zu einer Erhöhung des Komforts.

Eine derartige Anordnung ist z. B. aus der US 5,218,175 bekannt, bei der der akustische Klangkörper in dem Kofferraum angeordnet ist und zwischen dem Fahrzeugsitz und dem Fahrzeugrahmen ein akustischer Leiter vorgesehen ist, durch den der Schall in die Fahrgastzelle geleitet wird.

Der Erfindung liegt daher das technische Problem zugrunde, eine Vorrichtung zur Klangerzeugung in Kraftfahrzeugen zu schaffen, bei der der vorhandene Raum verbessert zur Erhöhung des Komforts ausgenutzt wird.
Die Lösung des technischen Problems ergibt sich durch die Merkmale des Patentanspruchs 1. Durch die Anordnung der Baßboxen im Naßbereich des Kraftfahrzeuges, wobei sowohl die Kopplung zwischen Baßbox und zugeordnetem akustischen Leiter als auch die Führung des oder der akustischen Leiter in den Trockenbereich des Kraftfahrzeuges gasdicht ausgebildet sind, wird der insgesamt zur Verfügung stehende Raum im Trockenbereich, also vorwiegend Fahrgastzelle und Kofferraum, erhöht. Der daraus resultierende Komfort ergibt sich entweder direkt durch eine Erhöhung der Bewegungsfreiheit in der Fahrgastzelle oder durch Verwendung des zusätzlich geschaffenen Raumes für zusätzliche, komfortfördernde Komponenten. Weitere vorteilhafte Ausgestaltungen der Erfindung ergeben sich aus den Unteransprüchen.

Durch die Anordnung eventuell vorhandener elektrischer Zuleitungen der Baßbox im akustischen Leiter sind diese vor Spritzwasser und Luftfeuchtigkeit ausreichend geschützt, wobei die Zuleitungen vorzugsweise an den Innenwänden des akustischen Leiters befestigt sind.

In Abhängigkeit von der Frequenz auf die die Box abgestimmt ist, weist der akustische Leiter eine Länge von 0,2 - 0,5 m auf. Weiter kann ein der oder den Baßboxen zugeordneter Verstärker unmittelbar wasser-/gasdicht an der oder den Baßboxen angeordnet werden, wobei die elektrischen Kontakte des Verstärkers innerhalb der Baßbox angeordnet sind. Ist der Verstärker mit einem Kühlkörper ausgebildet, so ist dieser vorzugsweise in den Naßbereich gerichtet, so daß die auftretende Verlustwärme gut abgeführt werden kann.
Besonders vorteilhaft läßt sich die Baßbox in den Stoßfängern anordnen, da diese ein verhältnismäßig großes ungenutztes Volumen aufweisen.

Die Erfindung wird nachfolgend anhand eines bevorzugten Ausführungsbeispiels näher erläutert. Die einzige Figur zeigt eine schematische Teildraufsicht auf ein Kraftfahrzeug.

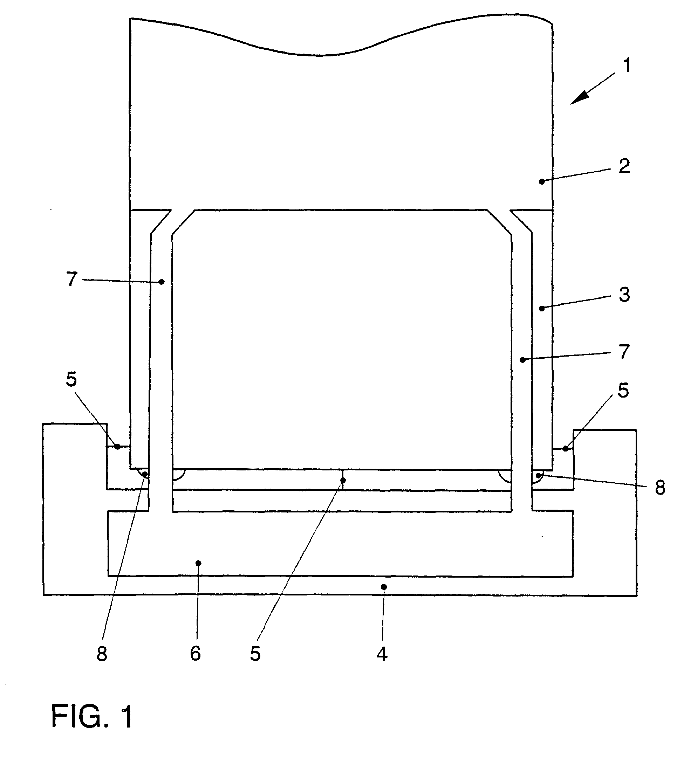

In der Fig. 1 ist eine Draufsicht auf das Heckteil eines Kraftfahrzeuges 1 dargestellt . Das Kraftfahrzeug umfaßt eine Fahrgastzelle 2, einen Kofferraum 3 und einen Stoßfänger 4, wobei der Stoßfänger 4 mittels Befestigungsmittel 5 lösbar an der Karosserie des Kraftfahrzeuges 1 befestigt ist. Im Stoßfänger 4 ist eine Baßbox 6 angeordnet. Der Baßbox ist ein akustischer Leiter 7 zugeordnet, der als Rohr ausgebildet ist, wobei die Kopplung zwischen der Baßbox 6 und dem zugehörigen akustischen Leiter 7 gasdicht ist.

Der akustische Leiter 7 wird durch eine Öffnung in den Kofferraum 3 geführt und wenn nötig direkt in die Fahrgastzelle, wobei die Öffnungen mittels Dichtungen 8 oder geeignetem Kleber gasdicht abgeschlossen sind, so daß keinerlei Feuchtigkeit und Auspuffgase in den Kofferraum 3 gelangen kann. Der akustische Leiter 7 wird dann entlang der Seitenwand des Kofferraumes 3 zur Fahrgastzelle 2 geführt, wo dieser durch weitere Öffnungen derart in die Fahrgastzelle mündet, daß dem Schall eine möglichst große freie Länge zur Ausbreitung zur Verfügung steht. Als Einleitungsort in die Fahrgastzelle bieten sich die Eckpunkte an, wobei die akustischen Leiter 7 dann zweckmäßigerweise diagonal in die Fahrgastzelle gerichtet sind. Da die Baßboxen 6 als solche hermetisch dicht ausgebildet sind, wird anschaulich durch die gasdichte Kopplung mit den akustischen Seiten 7 und deren gasdichte Einführung in den Trockenbereich letzterer um das Volumen der Baßboxen erweitert, wobei allerdings im beschriebenen Ausführungsbeispiel der Laderaum des Kofferraumes 3 um die Volumina der akustischen Leiter 7 verringert wird. Ist die Schallausbreitung aus dem Kofferraum in die Fahrgastzelle möglich, wie z. B. bei einem Kombi, so kann der Schall direkt in den Kofferraum eingeleitet werden und die akustischen Leiter 7 im Kofferraum können entfallen. Daher können die akustischen Leiter 7 auch außerhalb des Kofferraumes 3 geführt und direkt in die Fahrgastzelle 2 eingeführt werden.

Sowohl die Verbindung zwischen Stoßfänger 4 und Befestigungsmittel 5 als auch zwischen Baßbox 6 und Stoßfänger 4 sind lösbar ausgebildet, um bei einer etwaigen Beschädigung des Stoßfängers 4 nur diesen austauschen zu müssen. Ebenso kann die gasdichte Kopplung zwischen den Baßboxen 6 und den akustischen Leitern 7 lösbar ausgebildet sein. Zur Gewichtseinsparung kann die Baßbox 6 derart ausgebildet sein, daß diese vorhandene Wände der Stoßfänger 4 als Gehäusewände mitbenutzt.

## Patentansprüche

1. Kraftfahrzeug mit einer Vorrichtung zur Klangerzeugung, umfassend mindestens eine Baßbox und einen mit der Baßbox gekoppelten hohlförmigen akustischen Leiter, **dadurch gekennzeichnet, daß** die Baßbox (6) im Naßbereich des Kraftfahrzeuges (1) angeordnet und der akustische Leiter (7) gasdicht in den Trockenbereich geführt und die Kopplung zwischen Baßbox (6) und akustischem Leiter (7) gasdicht ausgebildet ist.

2. Kraftfahrzeug mit einer Vorrichtung zur Klangerzeugung nach Anspruch 1, **dadurch gekennzeichnet, daß** elektrische Leitungen der Baßbox (6) im akustischen Leiter (7) angeordnet sind.

3. Kraftfahrzeug mit einer Vorrichtung zur Klangerzeugung nach Anspruch 2, **dadurch gekennzeichnet, daß** die Leitungen an den Innenwänden des akustischen Leiters (7) befestigbar sind.

4. Kraftfahrzeug mit einer Vorrichtung zur Klangerzeugung nach einem der vorangegangenen Ansprüche, **dadurch gekennzeichnet, daß** der akustische Leiter (7) als Rohr ausgebildet ist.

5. Kraftfahrzeug mit einer Vorrichtung zur Klangerzeugung nach einem der vorangegangenen Ansprüche, **dadurch gekennzeichnet, daß** der akustische Leiter (7) diagonal in die Fahrgastzelle (2) geführt ist.

6. Kraftfahrzeug mit einer Vorrichtung zur Klangerzeugung nach einem der vorangegangenen Ansprüche, **dadurch gekennzeichnet, daß** der akustische Leiter (7) eine Länge zwischen 0,2 - 0,5 m aufweist.

7. Kraftfahrzeug mit einer Vorrichtung zur Klangerzeugung nach einem der vorangegangen Ansprüche, **dadurch gekennzeichnet, daß** ein der Baßbox (6) zugeordneter Verstärker wasser- und/oder gasdicht an der Baßbox (6) und dessen elektrische Kontakte in der Baßbox (6) angeordnet sind.

8. Kraftfahrzeug mit einer Vorrichtung zur Klangerzeugung nach Anspruch 7, **dadurch gekennzeichnet, daß** die Kühlrippen des Verstärkers in den Naßbereich gerichtet sind.

9. Kraftfahrzeug mit einer Vorrichtung zur Klangerzeugung nach einem der vorangegangenen Ansprüche, **dadurch gekennzeichnet, daß** die Baßbox (6) in einem Stoßfänger (4) angeordnet ist.

10. Kraftfahrzeug mit einer Vorrichtung zur Klangerzeugung nach einem der Ansprüche 1 bis 8, **dadurch gekennzeichnet, daß** die Baßbox (6) im Motorraum angeordnet ist.

11. Kraftfahrzeug mit einer Vorrichtung zur Klangerzeugung nach einem der vorangegangenen Ansprüche, **dadurch gekennzeichnet, daß** im Naßbereich vorhandene Bauteilwände als Wand der Baßbox (6) ausgebildet sind.

12. Stoßfänger für ein Kraftfahrzeug, **dadurch gekennzeichnet, daß** der Stoßfänger (4) zur Aufnahme mindestens einer Baßbox (6) verwendet wird.

## Claims

1. Motor vehicle having an apparatus for producing sound, comprising at least one bass box and a hollow acoustic conductor coupled to the bass box, **characterized in that** the bass box (6) is arranged in the wet region of the motor vehicle (1), the acoustic conductor (7) is routed into the dry region in gas-tight fashion, and the coupling between the bass box (6) and the acoustic conductor (7) is in gas-tight form.

2. Motor vehicle having an apparatus for producing sound according to Claim 1, **characterized in that** electrical leads for the bass box (6) are arranged in the acoustic conductor (7).

3. Motor vehicle having an apparatus for producing sound according to Claim 2, **characterized in that** the leads can be mounted on the interior walls of the acoustic conductor (7).

4. Motor vehicle having an apparatus for producing sound according to one of the preceding claims, **characterized in that** the acoustic conductor (7) is in the form of a pipe.

5. Motor vehicle having an apparatus for producing sound according to one of the preceding claims, **characterized in that** the acoustic conductor (7) is routed diagonally into the passenger compartment (2).

6. Motor vehicle having an apparatus for producing sound according to one of the preceding claims, **characterized in that** the acoustic conductor (7) has a length of between 0.2 and 0.5 m.

7. Motor vehicle having an apparatus for producing sound according to one of the preceding claims, **characterized in that** an amplifier associated with the bass box (6) is arranged on the bass box (6) in watertight and/or gas-tight fashion, and its electrical contacts are arranged in the bass box (6).

8. Motor vehicle having an apparatus for producing sound according to Claim 7, **characterized in that** the cooling ribs on the amplifier point into the wet region.

9. Motor vehicle having an apparatus for producing sound according to one of the preceding claims, **characterized in that** the bass box (6) is arranged in a bumper (4).

10. Motor vehicle having an apparatus for producing sound according to one of Claims 1 to 8, **characterized in that** the bass box (6) is arranged in the engine compartment.

11. Motor vehicle having an apparatus for producing sound according to one of the preceding claims, **characterized in that** component walls which are present in the wet region are in the form of a wall of the bass box (6).

12. Bumper for a motor vehicle, **characterized in that** the bumper (4) is used to hold at least one bass box (6).

## Revendications

1. Véhicule automobile comprenant un dispositif pour produire un son, comprenant au moins un caisson de grave et un guide acoustique de forme creuse accouplé au caisson de grave, **caractérisé en ce que** le caisson de grave (6) est disposé dans la région humide du véhicule automobile (1) et le guide acoustique (7) est guidé de manière étanche aux gaz dans la région sèche et l'accouplement entre le caisson de grave (6) et le guide acoustique (7) est réalisé de manière étanche aux gaz.

2. Véhicule automobile comprenant un dispositif pour produire un son selon la revendication 1, **caractérisé en ce que** des conduites électriques du caisson de grave (6) sont disposées dans le guide acoustique (7).

3. Véhicule automobile comprenant un dispositif pour produire un son selon la revendication 2, **caractérisé en ce que** les conduites peuvent être fixées aux parois intérieures du guide acoustique (7).

4. Véhicule automobile comprenant un dispositif pour produire un son selon l'une quelconque des revendications précédentes, **caractérisé en ce que** le guide acoustique (7) est réalisé sous forme de tube.

5. Véhicule automobile comprenant un dispositif pour produire un son selon l'une quelconque des revendications précédentes, **caractérisé en ce que** le guide acoustique (7) est guidé en diagonale dans l'habitacle du véhicule (2).

6. Véhicule automobile comprenant un dispositif pour produire un son selon l'une quelconque des revendications précédentes, **caractérisé en ce que** le guide acoustique (7) présente une longueur comprise entre 0,2 et 0,5 m.

7. Véhicule automobile comprenant un dispositif pour produire un son selon l'une quelconque des revendications précédentes, **caractérisé en ce qu'**un amplificateur associé au caisson de grave (6) est disposé de manière étanche à l'eau et/ou aux gaz sur le caisson de grave (6) et ses contacts électriques sont disposés dans le caisson de grave (6).

8. Véhicule automobile comprenant un dispositif pour produire un son selon la revendication 7, **caractérisé en ce que** les nervures de refroidissement de l'amplificateur sont orientées dans la région humide.

9. Véhicule automobile comprenant un dispositif pour produire un son selon l'une quelconque des revendications précédentes, **caractérisé en ce que** le caisson de grave (6) est disposé dans un pare-chocs (4).

10. Véhicule automobile comprenant un dispositif pour produire un son selon l'une quelconque des revendications 1 à 8, **caractérisé en ce que** le caisson de grave (6) est disposé dans un compartiment moteur.

11. Véhicule automobile comprenant un dispositif pour produire un son selon l'une quelconque des revendications précédentes, **caractérisé en ce que** des parois de composants prévues dans la région humide sont réalisées sous forme de paroi du caisson de grave (6).

12. Pare-chocs pour un véhicule automobile, **caractérisé en ce que** le pare-chocs (4) est utilisé pour recevoir au moins un caisson de grave (6).
